# FASCICULE DE BREVET EUROPEEN

(11) **EP 4 145 093 B1**
(45) Date de publication et mention de la délivrance du brevet: **22.01.2025**
(21) Numéro de dépôt: 22182805.6
(22) Date de dépôt: 04.07.2022
(51) Int. Cl.: G01D 18/00

(54) **DISPOSITIF DE REGLAGE D'UN CODEUR OPTIQUE A PHOTODETECTEURS ET PROCEDE DE REGLAGE**
VORRICHTUNG ZUM EINSTELLEN EINES OPTISCHEN KODIERERS MIT PHOTODETEKTOREN UND ENTSPRECHENDES EINSTELLUNGSVERFAHREN
DEVICE FOR ADJUSTING AN OPTICAL ENCODER WITH PHOTODETECTORS AND ADJUSTMENT METHOD

(30) Priorité: 01.09.2021 FR 2109120
(43) Date de publication de la demande: 08.03.2023
(73) Titulaire: Codechamp, 23190 Champagnat (FR)
(72) Inventeur: GIBARD, Dominique, 23190 BELLEGARDE EN MARCHE (FR)
(74) Mandataire: Dennemeyer & Associates S.A.

(56) Documents cités:
- US-A- 4 423 958
- US-A- 5 773 820
- US-A1- 2008 054 169
- US-A1- 2020 292 360

## Description

La présente invention concerne un dispositif de réglage d'un codeur optique à photodétecteurs ainsi qu'un procédé de réglage.

Un codeur optique est un appareil de détermination de la position angulaire d'un objet en mouvement par rapport à un autre objet. Pour cela, un disque comportant des zones opaques et transparentes est entrainé en rotation par l'arbre du codeur. Un faisceau optique émis par des diodes infrarouges traverse les zones transparentes du disque en rotation et frappe des photodétecteurs en créant un signal analogique qui est amplifié et transformé en signal numérique, ce dernier étant transmis à un moyen de traitement de données qui permet de fournir la position angulaire. Un photodétecteur est un composant électronique réagissant à la lumière. Il génère un courant en fonction de la quantité de lumière reçue. Du fait de la dispersion optique des composants optoélectroniques, il est nécessaire d'effectuer un réglage des phototdétecteurs afin que les signaux reçus et émis aient une amplitude voisine. De plus, les conditions d'utilisation de tels codeurs sont souvent à des températures dites extrêmes, soit positives soit négatives, ce qui affecte l'amplitude du signal du codeur. De même le procédé en lui-même d'utilisation du codeur est susceptible d'affecter la stabilité de ce dernier. En d'autres termes, il s'agit de corriger les écarts d'amplitude entre les photodétecteurs.

Pour cela, on connait une méthode dite manuelle où on utilise des boîtes de substitution à décades. Il s'agit d'instruments de test qui utilisent, dans le cas présent, une série de résistances, de condensateurs ou d'inductances pour répliquer différentes valeurs électriques. L'utilisation de telles boites nécessite un câblage physique avec les photodétecteurs, donc une opération longue et difficilement modifiable par un opérateur non qualifié. On connait par US-A-2020292360 une méthode de calibrage d'un codeur rotatif d'une position angulaire d'un arbre de machine. Le procédé utilise un point de départ d'une mesure puis, après un temps donné avec une minuterie, un point de mesure intermédiaire et un point de mesure finale. En calculant l'écart entre la position d'angle de rotation réelle mesurée et celle calculée selon le temps de mesure, on peut corriger et calibrer le codeur. Un tel procédé est adapté à un type de capteur, on connait également par US-A-5773820, US-A-4423958 et US-A-2008/054169 des moyens de réglage de codeur optique, en utilisant une valeur de consigne et en effectuant des corrections de la valeur de résistance de sortie dans le circuit des photodiodes des codeurs. Aucune des solutions connues ne décrit un moyen automatisé de réglage d'un codeur optique.

L'invention propose un dispositif et un procédé de réglage d'un capteur optique rapide, fiable et aisé à mettre en place et à utiliser.

A cet effet, l'invention a pour objet un dispositif de réglage d'un codeur optique à photodétecteurs, caractérisé en ce qu'il comprend un codeur optique à régler, un organe de mise en rotation du codeur optique, ledit organe étant adapté pour recevoir et entrainer en rotation le codeur optique, un organe de réglage muni d'un moyen de connexion avec un circuit imprimé du codeur optique et adapté pour coiffer de manière amovible le codeur optique en position sur l'organe de mise en rotation, ledit organe de réglage étant adapté pour envoyer un signal avec une amplitude de consigne de l'amplitude du signal pour chaque photodétecteur de chaque piste optique du codeur en rotation, pour collecter un signal en réponse émis par le codeur lorsqu'il a reçu le signal avec l'amplitude de consigne et pour modifier la rotation du codeur, le dispositif comportant également un organe de commande d'une part de l'organe de réglage et d'autre part de la rotation du codeur optique et un organe de contrôle également relié à une interface.

On obtient ainsi un dispositif où, grâce à l'organe de réglage on peut non seulement collecter les informations concernant la rotation du codeur mais également, par le biais de l'interface entre l'organe de contrôle et le module de commande, modifier et ajuster l'amplitude des signaux du photodétecteur afin que cette amplitude des signaux soit en accord avec la valeur de consigne. Il est à noter que la valeur de l'amplitude est définie par le fournisseur du codeur optique, sachant que plusieurs valeurs de l'amplitude peuvent être affectées à un même codeur.

Selon des aspects avantageux mais non obligatoires de l'invention, un tel dispositif de réglage peut comprendre une ou plusieurs des caractéristiques suivantes:
- Le moyen de connexion de l'organe de réglage avec le circuit imprimé comportent des plots de liaison télescopiques répartis sur une face de l'organe de réglage.
- Le moyen de connexion de l'organe de réglage avec le circuit imprimé comporte des connecteurs spécifiques répartis sur une face de l'organe de réglage.
- L'organe de réglage comprend une matrice ajustable d'au moins quatre résistances.
- l'organe de réglage comprend une matrice ajustable de soixante-quatre résistances.
- Les résistances couvrent une plage allant de 1 kΩ à 47 kΩ.
- L'organe de contrôle comprend au moins un organe d'acquisition de données tel un analyseur, un oscilloscope.

L'invention concerne également un procédé de réglage utilisant un dispositif de réglage conforme à l'une quelconque des caractéristiques précédentes, caractérisé en ce qu'il comporte au moins les étapes suivantes :
- a) positionner l'organe de réglage sur le circuit imprimé du codeur en positionnant les moyens de connexion de l'organe de réglage sur les plages d'accueil des contacts ou les vias d'interconnexion du circuit imprimé du codeur,
- b) définir, à partir de l'organe de commande, au moins une valeur de consigne de l'amplitude du signal pour chaque photodétecteur de chaque piste optique du codeur,
- c) collecter, lorsque le codeur est en rotation, au moins un signal émis par chaque photodétecteur constitutif d'une piste optique, en réponse au signal de consigne reçu,
- d) comparer l'amplitude du signal reçu avec l'amplitude du signal de consigne définie à l'étape b),
- e) faire varier par pas, constant ou non, l'écart entre la valeur de l'amplitude du signal de consigne et la valeur de l'amplitude du signal émis par le photodétecteur,
- f) valider le réglage en prenant l'écart le plus petit entre la valeur collectée à l'étape c) et la valeur de consigne de l'amplitude du signal.

Selon des aspects avantageux mais non obligatoires, un tel procédé peut comporter les étapes suivantes :
- Lors de l'étape c), on collecte au maximum seize signaux par piste.
- Lors de l'étape c), on collecte au maximum quarante signaux répartis sur plusieurs pistes.
- Lors de l'étape e), on règle l'amplitude du signal reçu et son inverse.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig. 1] est un schéma illustrant le principe de fonctionnement d'un dispositif de réglage d'un codeur optique conforme à un mode de réalisation de l'invention,
.[Fig. 2] est une vue simplifiée, en perspective d'un dispositif de réglage d'un codeur optique conforma à un mode de réalisation de l'invention,
[Fig. 3] est une vue partielle, à plus grande échelle d'une partie du dispositif de la figure 2, en configuration de fonctionnement avec un moyen de réglage de la rotation du codeur,
[Fig. 4] est une vue partielle et simplifiée, à une autre échelle de l'organe de réglage en position sur le codeur,
[Fig. 5] est une vue partielle à une autre échelle de l'organe de réglage de la figure 4,
[Fig. 6] est une vue similaire à la figure 5 du codeur de la figure 4 et
[Fig. 7] est une vue en perspective, à plus grande échelle d'un mode de réalisation d'un moyen de connexion équipant l'organe de réglage des figures 4 et 5.

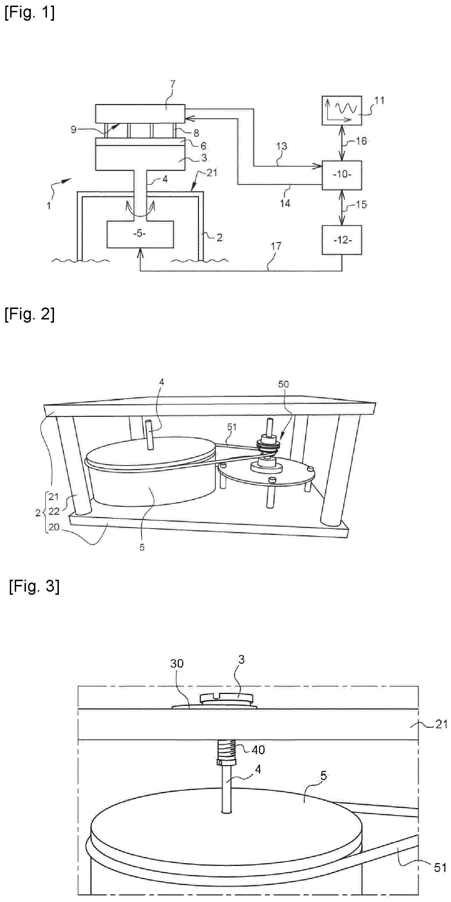

La figure 1 est un schéma représentant un dispositif 1 de réglage pour un codeur optique. En variante, le dispositif est adapté pour régler plusieurs codeurs, soit successivement soit simultanément. Le dispositif 1 comprend un châssis 2. Le châssis 2 est visible, selon un mode de réalisation de l'invention, à la figure 2. Il est formé d'une plaque support 20, ici rectangulaire, formant le fond du châssis et parallèle à une plaque 21, de forme similaire formant le dessus du châssis 2. Les plaques 20, 21 sont maintenues parallèles entre elles par des tiges 22, ici quatre tiges 22 réparties aux angles des plaques 20, 21. La plaque 21 est adaptée pour supporter au moins un codeur optique 3. Ce dernier est relié à un arbre 4 de mise en rotation du codeur 3.

L'arbre est entrainé par un système d'entrainement comportant une masse d'inertie 5. La masse 5 et la majeure partie de l'arbre 4 sont situés entre les plaques 20, 21 du châssis 2. Comme cela ressort de la figure 2, un moyen de variation de la vitesse de rotation de la masse 5, connu en soi par volant à inertie, est présent dans le châssis 2. Il comprend un jeu 50 de poulies de différents diamètres, entrainant par une courroie 51 la masse 5. Un moteur électrique, connu en soi et non référencé est positionné sous le jeu 50 de poulies afin d'entrainer l'arbre de rotation des poulies. En variante, d'utres moyens de variation de la vitesse de rotation d'un système d'entrainement en rotation, connus en soi, sont utilisés.

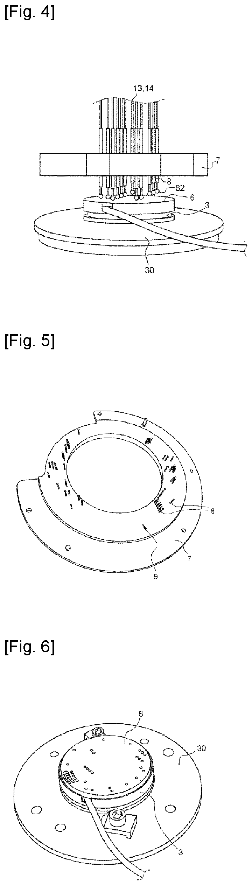

Le codeur 3 proprement dit est situé au-dessus du châssis 2, sur la plaque 21 à l'aplomb d'une ouverture ménagée dans la plaque 21 et permettant la liaison avec l'arbre 4 de la masse 5. Des moyens de guidage et d'orientation sont prévus afin de positionner précisément le codeur 3 sur la plaque 21. Un organe d'accouplement 40 est monté à l'extrémité de l'arbre 4 et assure le couplage et le centrage de l'arbre 4 dans le logement adapté sur le codeur 3. Le codeur 3 est maintenu en position sur la plaque 21 par un support 30 amovible. Le codeur 3 comprend en partie supérieure un circuit imprimé 6. A titre d'exemple, un circuit imprimé est illustré à la figure 6, étant entendu que d'autres circuits imprimés peuvent équiper le codeur 3. Sur le circuit imprimé 6, accessible à partir de la face supérieure de la plaque 21, on positionne un organe de réglage 7.

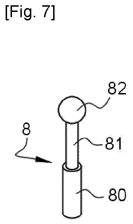

L'organe de réglage 7 est avantageusement de forme complémentaire au support 30. En variante, il est d'une autre forme. dans tous les cas, l'organe de réglage 7 comprend des connecteurs spécifiques. Ici, avantageusement, il s'agit d'une pluralité de plots 8, avantageusement à longueur variable, par exemple télescopiques. Un plot 8 est illustré à la figure 7. Il est formé, dans l'exemple, d'un segment 80 cylindrique à base circulaire dans lequel coulisse librement, sans friction, un segment 81 de forme complémentaire. Un ressort interne au plot 8 maintient en position éloignée les segments 80, 81. L'extrémité libre 82 du segment 81 est configurée en sphère arrondie, afin de ne pas endommager les plages d'accueil ou les vias d'interconnexion du circuit imprimé 6 lors du contact de l'organe 7 avec le circuit 6. De même, la force de rappel du ressort interne de chaque plot 8 est adaptée pour que l'extrémité 82 de chaque plot 8 soit en contact avec les plages d'accueil du circuit imprimé 6 mais sans appui fort risquant d'endommager le circuit imprimé.

Les plots 8 sont repartis sur une face 9 de l'organe de réglage 7. Le nombre et la répartition des plots 8 sont adaptés au nombre et à la position des plages d'accueil sur le circuit imprimé 6 du codeur optique. Afin que chaque plot 8 soit bien positionné sur une plage d'accueil du circuit imprimé, un moyen de guidage, non illustré, est prévu. Il s'agit, par exemple, de piétages, d'encoches et de reliefs de forme complémentaire réalisés sur le support 30 et sur l'organe 7 associés à un verrouillage en position de l'organe 7 sur le circuit 6 par exemple par vissage par quart de tour. En variante, on utilise d'autres moyens de guidage connus en soi. Un tel moyen de guidage fait également office de détrompeur, évitant ainsi tout positionnement erroné de l'organe 7 par rapport au circuit 6. En d'autres termes, chaque circuit imprimé 6 est associé à un organe de réglage 7.

La connexion entre les plots 8 et le circuit imprimé 6 est réalisée par appui simple de l'extrémité 82 de chaque plot 8 sur la plage d'accueil d'un contact métallique du circuit imprime 6. Une telle liaison entre l'organe de réglage 7 et le circuit imprimé 6 est donc facile à établir et à supprimer et elle n'affecte pas le codeur optique et/ou ses autres connexions. De plus, pour établir une telle liaison, il n'est pas nécessaire de modifier le circuit 6 et/ou d'effectuer des soudures entre le circuit 6 et l'organe 7, la liaison est totalement amovible et il n'est pas nécessaire d'avoir un outillage et/ou des connaissances spéciales pour la mettre en place ou la défaire.

L'organe de réglage 7 est relié à une interface 10 assurant la communication entre les divers composants du dispositif 1. L'interface 10 peut aussi agir, directement ou via l'organe 7, sur le circuit imprimé 6. L'interface 10 est reliée à un organe de contrôle 11 et à un organe de commande 12. Ces diverses liaisons sont filaires ou, en variante, non filaires. Entre l'interface 10 et l'organe de réglage 7, au moins deux liaisons, 13, 14 sont établies. La liaison référencée 13 assure l'acquisition et la collecte des valeurs et données relatives au signal émis par le codeur 3, plus particulièrement par un photodétecteur lorsque ce dernier est excité par un rayon lumineux. L'interface 10 relaie ce signal à l'organe de commande 12 par une double liaison, ici filaire, 15 et à l'organe de contrôle 11 par une double liaison, ici filaire, 16. L'organe de commande 12 génère des ordres et instructions, d'une part à l'organe de réglage 7 via l'interface 10 et d'autre part au système d'entrainement en rotation, via une liaison ici filaire dédiée 17. Pour la transmission des instructions de l'organe de commande, l'interface 10 utilise la liaison filaire 14 qui lui est dédiée. Comme cela ressort de la figure 4, les liaisons 13 et 14 sont confondues, chaque plot 8 étant pourvu d'une connexion individuelle à l'interface 10 qui permet l'envoi et la réception de données entre chaque plot 8 et l'interface 10.

Selon un mode de réalisation avantageux, l'organe de contrôle 11 comprend au moins un organe d'acquisition de données tel un analyseur, ou comme illustré un oscilloscope, alors que l'organe de commande 12 comprend au moins un ordinateur, portable ou non. L'organe 12 permet via l'interface 10, de stocker les données de consigne, les données reçues et d'envoyer les commandes au circuit imprimé pour ajuster les amplitudes entre les données de consigne et celles reçues. En variante, les organes de contrôle 11 et de commande 12 sont différents et/ou formés de plusieurs appareils ou réunis en un seul appareil.

Le procédé de réglage est maintenant décrit, en référence à la figure 1. La première étape, notée par la suite étape a), consiste à positionner l'organe de réglage sur le circuit imprimé 6 d'un codeur optique 3. Ce dernier a préalablement été mis en place sur le châssis 2, comme illustré à la figure 1, à savoir qu'une partie de l'arbre de rotation 4 est positionnée dans le volume interne du châssis et reliée à la masse 5 via l'accouplement entrainant en rotation l'arbre 4. Par ailleurs, le châssis 2 peut être configuré pour recevoir plusieurs codeurs, pour des réglages successifs ou simultanés, à l'aide de dispositifs de réglage fonctionnant en parallèle ou d'un dispositif adapté pour effectuer le réglage de plusieurs codeurs en même temps.

Dans tous les cas, lors de cette étape a), on positionne les plots 8 de connexion de l'organe de réglage 7 sur les plages d'accueil des contacts du circuit imprimé. L'organe 7 est simplement posé en appui de sorte à réaliser un contact électrique avec le circuit imprimé.

A l'issue de l'étape a), le codeur 3 est en place sur le châssis 2 est prêt à être entrainé en rotation, la masse 5 étant connectée par une liaison filaire 17 avec l'organe de commande 12. De même, l'organe de réglage 7 est prêt à échanger des informations, via les liaisons filaires 13 à 16 entre l'interface 10, l'organe de contrôle 11 et l'organe de commande 12.

L'étape suivante ou étape b) consiste à définir une valeur de consigne de l'amplitude du signal pour chaque photodétecteur de chaque piste du codeur optique 3. on conçoit que cette étape peut être exécutée en amont ou bien de manière définitive, pour autant que ces valeurs de consigne soient adaptées aux photodétecteurs à régler. En pratique, il s'agit de définir une valeur de la résistance associée au photodétecteur en réponse à un faisceau lumineux et à l'alignement optique. En d'autres termes, il s'agit de définir une valeur attendue de la résistance que doit fournir un photodétecteur donné en réponse au faisceau lumineux le frappant, cela en tenant compte des contraintes environnementales et de l'utilisation du codeur, par exemple la température, la vitesse de rotation mais également en tenant compte des capacités de traitement électronique du codeur, on joue sur ces paramètres afin d'obtenir un équilibre pour définir une amplitude de consigne. Il est à noter que les codeurs sont pourvus de résistances numériques. Cette valeur de consigne est en mémoire dans l'organe de commande 12. Dans le cas où on effectue le réglage sur un même codeur, Il est possible de définir plusieurs signaux de consigne par photodétecteur, selon des variables telles que les conditions environnementales, le type de faisceau lumineux ou autre. Avantageusement, un fichier de configuration du ou des codeur(s), avec les valeurs de consigne pour chaque codeur est intégré à l'organe de commande 12.

L'étape suivante ou étape c) est une étape de collecte de données émises par le codeur optique 3 en réponse à la lumière reçue. Pour cela, le codeur 3 est mis en rotation, dans des conditions connues et contrôlées, à partir de l'organe de commande 12 qui met en marche le système d'entrainement en rotation, via la liaison filaire 17. Dans cette configuration, chaque photodétecteur a une amplitude du signal variable selon le fait qu'il est ou non éclairé. Cette valeur de l'amplitude du signal est envoyée, par la liaison 13 à l'interface 10 qui va la retransmettre, par la liaison 15 à l'organe de commande 12 et par la liaison 16 à l'organe de contrôle 11. Lors de cette étape, le dispositif peut collecter plusieurs signaux simultanément, avec un maximum de seize signaux par piste et un maximum de quarante signaux lorsque ceux-ci sont répartis sur plusieurs pistes d'un codeur. En variante, les signaux sont collectés en décalé, ce qui permet d'augmenter le nombre de signaux collectés.

L'étape suivante, référencée d) est une étape de comparaison entre la valeur de l'amplitude du signal de consigne et la ou les valeurs de l'amplitude du ou des signaux reçus du codeur optique 3. Le ou les signaux émis par le codeur 3 sont directement collectés par l'organe de réglage 7 et transmis par la liaison filaire à l'interface 10 qui les répercute à l'organe de contrôle 11 et à l'organe de commande 12 par les liaisons filaires 16, respectivement 15. Les signaux reçus sont représentés, sur l'organe de contrôle 11, donc ici sur un oscilloscope, sous forme de courbes. L'organe de contrôle affiche, dans certains cas, une double courbe : celle correspondant au signal reçu et celle correspondant à l'inverse du signal reçu. La forme de ces courbes est sinusoïdale, en trapèze, en carré selon que le signal provient d'un photodétecteur placé sur une piste optique dite de poids faible ou de poids fort selon la quantité de lumière arrivant sur le photodétecteur, donc selon le nombre de zones transparentes ménagées dans le disque à ce niveau. En affichant, dans certains cas, le signal et son inverse, on vérifie que la variation entre la valeur de consigne et la valeur reçue est bien la même sur les deux courbes. Dans ce cas, il est possible d'annuler l'écart entre la valeur de consigne et la valeur reçue, par opposition de phase entre les courbes, ce qui permet un réglage optimal.

L'étape suivante, à savoir l'étape e) est une étape de réglage effectuée par l'organe de commande 12 via la liaison 15 avec l'interface 10 et la liaison 14 permettant de gérer et modifier les caractéristiques du codeur optique 3, par l'intermédiaire de l'organe de réglage 7 agissant sur le circuit imprimé 6. L'organe de commande 12, selon l'écart constaté entre la valeur de consigne de l'amplitude du signal et la valeur de l'amplitude du signal émis initie un réglage de type pas à pas. Le pas est non constant. En variante, le pas est constant. Dans l'exemple, le pas est non constant et diminue au fur et à mesure que l'écart entre les deux valeurs se réduit et que l'on tend vers la valeur de consigne. Le réglage consiste à faire varier, dans un sens ou dans l'autre, en augmentant ou en diminuant, la résistance du photodétecteur, résistance variant généralement entre 1 kΩ et 47 kΩ. On conçoit que la plage de réglage est adaptée aux résistances et donc peut aller au-delà de 47 kΩ. L'organe de réglage comprend une matrice ajustable d'au moins quatre résistances, dans l'exemple de soixante-quatre résistances. L'organe de commande agit sur l'interface 10 qui fait varier la résistance du photodétecteur. Le résultat est visualisé et donc contrôlé sur l'oscilloscope 11.

Lorsque l'écart est considéré comme minimal ou du moins acceptable par l'organe de commande 12, le dispositif initie, lors d'une étape référencée f), une validation du réglage qui sera stockée dans une mémoire non volatile dans l'électronique du circuit imprimé 6. L'écart le plus petit est pris en compte pour valider la valeur finale.

Il est possible, lors d'une étape supplémentaire d'effectuer un test de validation de la valeur réglée effectuant à nouveau les étapes a) à d).

Lorsqu'une piste optique comprend un défaut, ce dernier, en général, apparait de manière régulière et répétitive sur les courbes générées par l'organe de contrôle 11. Il est alors possible, via l'organe de commande 12 et l'interface 10 d'indiquer à l'opérateur, par une information visuelle et/ou sonore, qu'il y a un défaut sur une piste optique du codeur et d'identifier la piste concernée. Cela permet une détection précoce du problème de gravure de la piste et donc une intervention très en amont sur la chaine de fabrication.

## Revendications

1. Dispositif (1) de réglage d'un codeur optique (3) à photodétecteurs, **caractérisé en ce qu'**il comprend un codeur optique (3) à régler, un organe (2, 5, 50, 4, 51) de mise en rotation du codeur optique (3), ledit organe étant adapté pour recevoir et entrainer en rotation le codeur optique, un organe de réglage (7) muni d'un moyen de connexion (8, 20) avec un circuit imprimé (6) du codeur optique (3) et adapté (9) pour coiffer de manière amovible le codeur optique (3) en position sur l'organe de mise en rotation, ledit organe de réglage (7) étant adapté pour envoyer un signal avec une amplitude de consigne de l'amplitude du signal pour chaque photodétecteur de chaque piste optique du codeur (3) en rotation, pour collecter un signal en réponse émis par le codeur (3) lorsqu'il a reçu le signal avec l'amplitude de consigne et pour modifier la rotation du codeur (3), le dispositif comportant également un organe de commande (12) d'une part de l'organe de réglage (7) et d'autre part de la rotation du codeur optique (3) et un organe de contrôle (11) également relié à une interface (10).

2. Dispositif selon la revendication 1, **caractérisé en ce que** le moyen de connexion (8) de l'organe de réglage (7) avec le circuit imprimé (6) comporte des plots (8) de liaison télescopique (80, 81) répartis sur une face de l'organe de réglage (7).

3. Dispositif selon la revendication 1, **caractérisé en ce que** le moyen de connexion de l'organe de réglage (7) avec le circuit imprimé (6) comporte des connecteurs spécifiques répartis sur une face de l'organe de réglage (7).

4. Dispositif selon la revendication 1, **caractérisé en ce que** l'organe de réglage (7) comprend une matrice ajustable d'au moins quatre résistances.

5. Dispositif selon la revendication 4, **caractérisé en ce que** l'organe de réglage (7) comprend une matrice ajustable de soixante-quatre résistances.

6. Dispositif selon l'une des revendications 4 ou 5, **caractérisé en ce que** les résistances couvrent une plage allant de 1 kΩ à 47 kΩ.

7. Dispositif selon la revendication 1, **caractérisé en ce que** l'organe de contrôle (11) comprend au moins un organe d'acquisition de données, tel un analyseur, un oscilloscope (11).

8. Procédé de réglage utilisant un dispositif de réglage conforme à l'une quelconque des revendications précédentes, **caractérisé en ce qu'**il comporte au moins les étapes suivantes :
- a) positionner l'organe de réglage (7) sur le circuit imprimé (6) du codeur (3) en positionnant les moyens de connexion (8) de l'organe de réglage (7) sur les plages d'accueil des contacts ou les vias d'interconnexion du circuit imprimé (6) du codeur (3),
- b) définir, à partir de l'organe de commande (12), au moins une valeur de consigne de l'amplitude du signal pour chaque photodétecteur de chaque piste optique du codeur (3),
- c) collecter, lorsque le codeur (3) est en rotation, au moins un signal émis par chaque photodétecteur constitutif d'une piste optique en réponse au signal de consigne reçu,
- d) comparer l'amplitude du signal reçu avec l'amplitude du signal de consigne définie à l'étape b),
- e) faire varier par pas, constant ou non, l'écart entre la valeur de l'amplitude du signal de consigne et la valeur de l'amplitude du signal émis par le photodétecteur,
- f) valider le réglage en prenant l'écart le plus petit entre la valeur collectée à l'étape c) et la valeur de consigne de l'amplitude du signal.

9. Procédé selon la revendication 8, **caractérisé en ce que** lors de l'étape c), on collecte au maximum seize signaux par piste.

10. Procédé selon la revendication 8, **caractérisé en ce que** lors de l'étape c), on collecte au maximum quarante signaux répartis sur plusieurs pistes.

11. Procédé selon la revendication 8, **caractérisé en ce que** lors de l'étape e), on règle l'amplitude du signal reçu et son inverse.

## Patentansprüche

1. Einstellvorrichtung (1) eines optischen Codierers (3) mit Photodetektoren, **dadurch gekennzeichnet, dass** sie einen einzustellenden optischen Codierer (3), ein Organ (2, 5, 50, 4, 51) zum in Drehung Versetzen des optischen Codierers (3), wobei das Organ geeignet ist, um den optischen Codierer aufzunehmen und in Drehung zu versetzen, ein Einstellorgan (7) umfasst, das mit einem Verbindungsmittel (8, 20) mit einer Leiterplatte (6) des optischen Codierers (3) versehen ist und geeignet (9) ist, um den optischen Codierer (3) in Position auf dem Organ zum in Drehung Versetzen abnehmbar abzudecken, wobei das Einstellorgan (7) geeignet ist, um ein Signal mit einer Sollamplitude der Amplitude des Signals für jeden Photodetektor jeder optischen Spur des Codierers (3) in Drehung zu senden, um ein Signal als Antwort zu erfassen, das von dem Codierer (3) gesendet wird, wenn er das Signal mit der Sollamplitude empfangen hat, und um die Drehung des Codierers (3) zu modifizieren, wobei die Vorrichtung ebenfalls ein Steuerorgan (12) einerseits des Einstellorgans (7) und andererseits der Drehung des optischen Codierers (3) und ein Kontrollorgan (11) umfasst, das ebenfalls mit einer Schnittstelle (10) verbunden ist.

2. Vorrichtung nach Anspruch 1, **dadurch gekennzeichnet, dass** das Verbindungsmittel (8) des Einstellorgans (7) mit der Leiterplatte (6) Kontaktstellen (8) zur teleskopischen Verbindung (80, 81) umfasst, die auf einer Seite des Einstellorgans (7) verteilt sind.

3. Vorrichtung nach Anspruch 1, **dadurch gekennzeichnet, dass** das Verbindungsmittel des Einstellorgans (7) mit der Leiterplatte (6) spezifische Steckverbinder umfasst, die auf einer Seite des Einstellorgans (7) verteilt sind.

4. Vorrichtung nach Anspruch 1, **dadurch gekennzeichnet, dass** das Einstellorgan (7) eine verstellbare Matrix aus mindestens vier Widerständen umfasst.

5. Vorrichtung nach Anspruch 4, **dadurch gekennzeichnet, dass** das Einstellorgan (7) eine verstellbare Matrix aus vierundsechzig Widerständen umfasst.

6. Vorrichtung nach einem der Ansprüche 4 oder 5, **dadurch gekennzeichnet, dass** die Widerstände einen Bereich von 1 kΩ bis 47 kΩ abdecken.

7. Vorrichtung nach Anspruch 1, **dadurch gekennzeichnet, dass** das Kontrollorgan (11) mindestens ein Datenerfassungsorgan, wie einen Analysator, ein Oszilloskop (11) umfasst.

8. Einstellverfahren, das eine Einstellvorrichtung nach einem der vorhergehenden Ansprüche verwendet, **dadurch gekennzeichnet, dass** es mindestens die folgenden Schritte umfasst:
- a) das Einstellorgan (7) auf der Leiterplatte (6) des Codierers (3) positionieren, indem die Verbindungsmittel (8) des Einstellorgans (7) auf den Aufnahmebereichen der Kontakte oder den Verbindungs-Durchkontaktierungen der Leiterplatte (6) des Codierers (3) positioniert werden,
- b) ausgehend von dem Steuerorgan (12) mindestens einen Sollwert der Amplitude des Signals für jeden Photodetektor jeder optischen Spur des Codierers (3) festlegen,
- c) wenn sich der Codierer (3) in Drehung befindet, mindestens ein Signal erfassen, das von jedem Photodetektor, der eine optische Spur bildet, als Antwort auf das empfangene Sollsignal gesendet wird,
- d) die Amplitude des empfangenen Signals mit der Amplitude des Sollsignals, die in Schritt b) definiert wird, vergleichen,
- e) die Differenz zwischen dem Wert der Amplitude des Sollsignals und dem Wert der Amplitude des Signals, das von dem Photodetektor gesendet wird, schrittweise, konstant oder nicht, variieren,
- f) die Einstellung bestätigen, indem die kleinste Differenz zwischen dem Wert, der in Schritt c) erhoben wird, und dem Sollwert der Amplitude des Signals genommen wird.

9. Verfahren nach Anspruch 8, **dadurch gekennzeichnet, dass** während des Schrittes c) maximal sechzehn Signale pro Spur erfasst werden.

10. Verfahren nach Anspruch 8, **dadurch gekennzeichnet, dass** während des Schrittes c) maximal vierzig Signale erfasst werden, die auf mehrere Spuren verteilt sind.

11. Verfahren nach Anspruch 8, **dadurch gekennzeichnet, dass** während des Schrittes e) die Amplitude des empfangenen Signals und dessen Kehrwert eingestellt wird.

## Claims

1. A device (1) for adjusting a photodetector optical encoder (3), **characterized in that** same comprises an optical encoder (3) to adjust, a member (2, 5, 50, 4, 51) for rotating the optical encoder (3), said member being suitable for receiving and driving the optical encoder in rotation, an adjustment member (7) having a means of connection (8, 20) with a printed circuit (6) of the optical encoder (3) and suitable (9) for movably capping the optical encoder (3) in position on the member for rotating, said adjustment member (7) being suitable for sending a signal with amplitude information on the amplitude of the signal for each photodetector of each optical track of the rotating encoder (3), for collecting a response signal emitted by the encoder (3) when same has received a signal with the setpoint amplitude and for modifying the rotation of the encoder (3), the device also including a control member (12) on the one hand of the adjustment member (7) and on the other of the rotation of the optical encoder (3) and a monitoring member (11) also connected to the interface (10).

2. The device according to claim 1 **characterized in that** the means of connection (8) of the adjustment member (7) with the printed circuit (6) include studs (8) for telescopic connection (80, 81) distributed on one face of the adjustment member (7).

3. The device according to claim 1 **characterized in that** the means of connection of the adjustment member (7) with the printed circuit (6) include specific connectors distributed over a face of the adjustment member (7).

4. The device according to claim 1 **characterized in that** the adjustment member (7) comprises an adjustable matrix of at least four resistors.

5. The device according to claim 4 **characterized in that** the adjustment member (7) comprises an adjustable matrix of sixty-four resistors.

6. The device according to claims 4 or 5 **characterized in that** the resistors cover a range going from 1 kΩ to 47 kΩ.

7. The device according to claim 1 **characterized in that** the monitoring member (11) comprises at least a data acquisition member, such as an analyzer or an oscilloscope (11).

8. An adjustment method using an adjustment device according to any of the preceding claims, **characterized in that** said method includes at least the following steps:
- a) positioning the adjustment member (7) on the printed circuit (6) of the encoder (3), by positioning the means of connection (8) of the adjustment member (7) on the receiving ranges of the contacts or interconnection vias of the printed circuit (6) of the encoder (3),
- b) defining, from the control member (12), at least one amplitude instruction value of the signal for each photodetector of each track of the optical encoder (3),
- c) collecting, when the encoder (3) is rotating, at least one signal emitted by each constituent photodetector from an optical track in response to the instruction signal received,
- d) comparing the amplitude of the received signal with the amplitude of the instruction signal defined in step b),
- e) varying in steps, whether constant or not, the difference between the amplitude value of the instruction signal and the amplitude value of the signal emitted by the photodetector,
- f) validating the adjustment by taking the smallest difference between the value collected at step c) and the setpoint value of the amplitude of the signal.

9. The method according to claim 8 **characterized in that** during step c), a maximum of sixteen signals are collected per track.

10. The method according to claim 8 **characterized in that** during step c), a maximum of forty-eight signals distributed over a plurality of tracks are collected.

11. The method according to claim 8 **characterized in that** during step e), the amplitude of the received signal and the inverse thereof are adjusted.
